(19) **Europäisches Patentamt European Patent Office Office européen des brevets**

(11) **EP 4 560 538 A1**

(12) **EUROPEAN PATENT APPLICATION**

(43) Date of publication:
28.05.2025 Bulletin 2025/22

(21) Application number: 23212337.2

(22) Date of filing: 27.11.2023

(51) International Patent Classification (IPC):
*G06N 3/09* (2023.01)    *G06N 3/098* (2023.01)
*G06N 20/00* (2019.01)   *G06N 20/20* (2019.01)

(52) Cooperative Patent Classification (CPC):
G06N 3/09; G06N 3/098; G06N 20/00; G06N 20/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Infineon Technologies AG
85579 Neubiberg (DE)

(72) Inventors:
• SUKIANTO, Tobias
  80636 München (DE)
• CARBONELLI, Cecilia
  81477 München (DE)
• STROBEL, Maximilian
  81539 München (DE)
• MITTERMAIER, Simon
  85659 Forstern (DE)
• PATRA, Subhankar
  81925 München (DE)

(74) Representative: Kraus & Lederer PartGmbB et al
Thomas-Wimmer-Ring 15
80539 München (DE)

(54) **PSEUDO-LABELING BASED ON UNCERTAINTY OR PROBABILITY**

(57) Techniques of retraining a machine-learning model such as a deep neural network at agents deployed in the field, i.e., retraining at the edge, are disclosed. Multiple training data sets are considered for the retraining, to discriminate between labels and pseudo-labels. Techniques of determining the pseudo-labels based on uncertainty and/or probability are disclosed.

**FIG. 4**

EP 4 560 538 A1

**Description**

TECHNICAL FIELD

Various aspects of the disclosure generally pertain to retraining machine-learning models. Various aspects of the disclosure specifically pertain to retraining at the edge. Various aspects pertain to a self-labeling process to determine pseudo-labels for populating training datasets used in said retraining.

BACKGROUND

Machine learning (ML) models, e.g., deep neural networks, are often used to infer predictions based on measurement data obtained from a sensor, e.g., a radar sensor. Such inference can be executed at an edge-deployed agent. "Edge-deployed" means that the agent is not a central authority, e.g., implemented by a central server not located in the field; but rather a field device that acquires the measurement data in the field and is typically to some degree controlled by the central authority. Typically, the central authority would deploy the ML model in an initial training state to multiple agents.

According to reference implementations, in a development phase, large measurement campaigns are conducted to build, at the central authority, a training dataset that is intended to densely sample the entire input space expected in the field, i.e., has good coverage under a wide range of scenarios and users. In the measurement campaign, sensors of the same type as those that will later be deployed in the field are used to acquire feature vectors for the training dataset.

To enable training, ground truth is acquired to determine labels forming output samples; the output samples are paired with input samples, i.e., the measurement feature vectors.

There are various options available for determining the ground truth. For instance, manual annotation by an expert is an option. Alternatively, or additionally, alternative sensors such as cameras can be used to collect images based on which the ground-truth can be reliably determined. Such alternative sensors would not be available in the field-deployed agents. This is referred to as supervised learning.

Based on training datasets including pairs of input samples and output samples, the ML model is trained and then the ML model is deployed to the agents for inference.

Despite the initial efforts for accurate data collection and labeling in a central training process, performance in the field often degrades due to mismatch between the scenarios considered in training and the real-world deployment.

SUMMARY

Accordingly, a need exists for advanced techniques of using ML models for inferring predictions based on measurement feature vectors that are determined based on measurement data from sensors such as radar sensors or other depth sensors. A need exists for techniques that mitigate at least some of the above-identified restrictions and drawbacks.

This need is met by the features of the independent claims. The features of the dependent claims define embodiments.

Hereinafter, self-labeling processes are disclosed. The disclosed self-labeling processes enable to determine pseudo-labels that can be used as output samples in a training process for (re-) training and ML model such as a deep neural network solving a classification task. It is specifically possible (but not mandatory) to employ such self-labeling processes at the edge, i.e., execute the self-labeling processes at field-deployed agents.

The self-labeling processes disclosed herein consider an uncertainty of a prediction provided by the ML model. Alternatively, or additionally, the self-labeling processes disclosed herein take into account probabilities (e.g., categorial probabilities) of the prediction provided by the ML model. By taking into account uncertainty and/or probabilities, creation of inaccurate pseudo-labels can be avoided. Pseudo-labels with higher reliability can be determined.

A computer-implemented method includes using a ML model in a first training state to infer predictions based on multiple measurement feature vectors. The method also includes populating a first training dataset based on the predictions. The first training dataset is populated using labels of a first subset of the multiple measurement feature vectors. The method further includes populating a second training dataset different than the first training dataset based on the predictions. The second training dataset is populated using pseudo-labels for a second subset of the multiple measurement feature vectors. The method further includes determining a second training state of the ML model based on the first training dataset and the second training dataset.

For instance, the method may be executed by an agent. Re-training at the edge is possible. The agent can be deployed in the field. The method may further include obtaining the ML model in the first training state from a central authority. It would also be possible that the method is at least partly executed at a central authority.

The pseudo-labels can be selectively determined if uncertainties of the predictions are below a predefined thresholds. Such uncertainties can be determined using stochastic dropout sampling and/or ensemble sampling and/or probabilistic ML models and/or an evidential distribution of the respective predictions.

By taking into account that the uncertainties are sufficiently small, unreliable pseudo-labels can be avoided. The data quality of the second training dataset is increased. Thereby, the second training state of the ML model will provide more accurate results.

A computer-implemented method for use in a central authority includes providing a machine-learning model in a first training state to multiple agents. The computer-implemented method also includes obtaining, from each of the multiple agents, information indicative of the machine-learning model in the second training state. The computer-implemented method also includes determining a third training state of the machine-learning model based on the multiple second training states.

For instance, the method may further include obtaining context information for the machine-learning model in the respective second training state from each of the multiple agents. Said determining of the third training state of the machine-learning model may be further based on the context information. Such contact information may be indicative of a size of a first training dataset that is used for determining the second training state and that is populated using labels. Alternatively or additionally, such context information may be indicative of a size of a second training dataset that is also used for determining the second training state and that is populated using pseudo-labels. It would also be possible that such context information is indicative of a relative size of the first training dataset with respect to the second training dataset.

For instance, it would be possible to determine the third training dataset based on a weighted combination of weights of the ML model associated with each of the multiple second training states. Then, such second training states having a higher impact of the respective first training dataset (based on labels, instead of pseudo-labels) can be considered more prominently than such second training states that are more affected by the respective second training state (based on pseudo-labels, instead of labels).

Furthermore, it would be possible to predominantly consider such second training states obtained from larger training datasets.

An agent includes a compute circuitry, e.g., a processor and a memory. The compute circuitry is configured to obtain a machine-learning model in a first training state from a central authority. The compute circuitry is further configured to use the machine-learning model in the first training state to infer predictions based on multiple measurement factors that are obtained at the agent. The compute circuitry is further configured to populate a first training dataset using labels for a first subset of the multiple measurement feature vectors based on the predictions. The compute circuitry is further configured to populate a second training dataset using pseudo-labels for a second subset of the multiple measurement feature vectors based on the predictions. The compute circuitry is further configured to determine a second training state of the machine-learning model based on the first training dataset and the second training dataset.

A central authority includes a compute circuitry, e.g., a processor and a memory that stores program code that can be loaded and executed by the processor. The compute circuitry is configured to provide a machine-learning model in a first training state to multiple agents. The compute circuitry is further configured to obtain information indicative of the machine-learning model in a respective second training state from each of the multiple agents. The compute circuitry is further configured to determine a third training state of the machine-learning model based on the multiple second training states.

A system includes a central authority and one or more agents as disclosed above.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates an agent according to various examples. claim 5

FIG. 2 schematically illustrates a radar sensor according to various examples.

FIG. 3 schematically illustrates multiple gesture classes that can be predicted in accordance with various examples.

FIG. 4 schematically illustrates a system including a central authority implemented by a central server multiple agents according to various examples.

FIG. 5 is a flowchart of a method according to various examples.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, aspects associated with ML models are disclosed. Various kinds and types of ML models can benefit from the techniques disclosed herein. Examples include classification and regression tasks performed by a ML model. Examples of ML models include deep neural network, e.g., convolutional neural networks, support vector machines, multilayer perceptrons, etc.

The ML models can be trained to perform different tasks. Example tasks include gesture class prediction, e.g., based on measurement feature vectors obtained based on radar measurements. Further example tasks include people counting, e.g., based on measurement feature vectors obtained based on radar measurements. A further task is people presence detection, e.g., in the interior of a vehicle. Further tasks include image processing, e.g., to detect certain structures or abnormalities in two-dimensional (2-D) images, e.g., for wafer inspection, medical image processing, etc.

Depending on the particular task or use case for which an ML model is employed, also the type of measurement data based on which a measurement feature vector serving as an input sample to be input to the ML model can widely vary. The measurement data can be acquired using various measurement modalities and sensors. It would be possible to acquire the measurement data using a depth sensor such as an optical time-of-flight (ToF) sensor, e.g., a time-of-flight camera or a light detection and ranging (LIDAR) sensor. Another type of depth sensor is a radar sensor, e.g., a mm-wave or ultrawideband radar sensor. A time-of-flight (ToF) camera performs ranging measurements based on the time duration of light pulses travelling to the scene and back. ToF cameras often used light emitting diodes as light sources. LIDAR sensors use laser diodes or lasers as light sources. LIDAR sensors can use ToF ranging or measurement of interference of a continuous wave of primary and a continuous wave of reflected, secondary light. Light sources for ToF cameras and LIDAR are often in the infrared or deep infrared regime. 2-D images can be acquired using cameras or medical imaging equipment, e.g., Magnetic Resonance Imaging apparatuses or Computed Tomography apparatuses.

Various techniques disclosed herein will focus on a use case in which the measurement feature vector is determined based on measurement data that is acquired using a radar sensor; but similar techniques may also be applied for other types of sensors.

Hereinafter, techniques of re-training ML models are disclosed. Re-training means that a first training state of the ML model is updated, to obtain a second training state. I.e., the weights of the ML model are updated or specifically optimized.

A training process of for training or re-training an ML model is explained next. In the training process, an input sample included in a training dataset is input into the ML model, e.g., a deep neural network, which processes the input sample through its layered structure to generate the prediction (forward propagation). This prediction is compared to the output sample in the training dataset associated with the input sample. The output sample can be a label or pseudo-label. The comparison is implemented using a loss function, which is a metric that quantifies the error of the prediction. Backpropagation is then employed to calculate the gradient of the loss function with respect to each weight, essentially measuring how changes to weights will affect the error. The optimization algorithm, often stochastic gradient descent or one of its variants, uses the gradients provided by backpropagation to adjust the weights and biases of the network. This process is repeated across many epochs for each entry (i.e., each pair of input sample and output sample) in the training dataset.

Various disclosed examples are based on the finding that accurate ML models need to be trained on large training datasets, i.e., training datasets that include a large number of pairs of input-output samples. The training datasets need to sample, at sufficient density, the entire input space in which input samples are expected. Only then the ML model is capable of generalizing accurately across input samples encountered in the field. To give an example, an ML model may be used for inferring predictions of the number of people present in the scene based on measurement feature vectors acquired using a radar sensor. To provide a reliable people counting prediction, the ML model should be trained on measurement feature vectors (here implementing the input samples) acquired for different locations of people in front of the radar sensor, different environments, different backgrounds, different people, different movement patterns of the people, etc.Using reference implementations to obtain respective input sample - output sample pairs to populate a training dataset can require significant time and effort. It requires a data acquisition lab, the availability of many users, and significant time investment.

To mitigate these problems, re-training at the edge is enabled. I.e., an ML model can be deployed from a central authority to multiple field-deployed agents and the agents can then perform the training process to re-train the ML model based on local agent-specific training datasets. These agent-specific training datasets are locally populated. I.e., the training datasets are populated based on pairs of input samples - output samples obtained at agents.

By populating training datasets based on pairs of input samples and output samples determined at agents, it is possible to capture the distribution of input samples in the respective input space as observed in the field. For example, certain parts of the input space that had only been sparsely sampled in a central measurement campaign can be densely sampled based on measurement feature vectors and associated predictions of the ML model observed in the field at the agents. This re-training at the edge, accordingly enables to more accurately train the ML model.

However, the availability of ground truth can be limited at the agents. Typically, ground truth would be derived from a user input, e.g., confirming a certain prediction made by the ML model or providing corrections to the predictions. In such scenarios, it is possible to determine a label based on the ground truth. However, ground truth may only be sparsely available at the agents.

To mitigate this, according to various aspects, a self-labeling process is disclosed that enables to determine reliable pseudo-labels in an automated manner. The pseudo-labels can form output samples and, together with the respective input sample formed by a measurement feature vector, be added to the training dataset.

A pseudo-label is an output sample for which ground truth is not available. A pseudo-label is, accordingly, different from a label. A label is an output sample for which ground truth is available. For instance, ground truth can be obtained - even at an agent - from a user interaction process, e.g., with a verified user providing reliable results. For instance, a user (e.g., an accredited user) may, directly or indirectly, confirm a prediction inferred by the ML model. A user may alter or amend a prediction inferred by the ML model. Such processes can generate ground truth and, accordingly, a label. Since ground truth is not required for pseudo-labels, pseudo-labels can be generated automatically from the prediction of the ML model (self-labeling process). Thus, there is a tendency that more pseudo-labels are available if compared to labels. The label is generally associated with a relatively high reliability. Pseudo-labels tend to have a relatively lower reliability, because ground truth is not available for determining the pseudo-labels. Nonetheless, techniques are disclosed to obtain pseudo-labels that are still comparatively reliable.

By generating pseudo-labels at field deployed agents, more comprehensive training datasets can be built, comprehensively sampling the input space in regions in which actual input samples are observed. This enables to track distribution drifts, e.g., where input samples encountered by agents are located in regions of the input space not are not densely sampled in the training dataset employed by a central authority for initial training. This helps to reduce the error rate observed for the predictions by the ML model.

To reliably determine pseudo-labels, the uncertainty of the prediction of the ML model can be taken into by the self-labeling process. The uncertainty can be implemented by at least one of the aleatoric uncertainty or the epistemic uncertainty. As a general rule, aleatoric uncertainty (also referred to as statistical uncertainty) refers to the notion of randomness, that is, the variability in the outcome of the prediction which is due to inherently random effects in the measurement feature vectors. Example sources of aleatoric uncertainty are measurement or data noise, drifts in the sensor operation, etc. Aleatoric uncertainty is different than epistemic uncertainty (also referred to systematic uncertainty). Epistemic uncertainty refers to uncertainty caused by limitations of the ML model, e.g., limited model accuracy, etc.. Accordingly, epistemic uncertainty can stem from incomplete sampling of the input space with training data during the training of the ML model. For example, consider an ML model that is trained to discriminate cats from dogs; however, the training data only captures certain races of dogs (e.g., Swiss Saint Bernard dogs and German Shepard dogs), while other races of dogs (e.g., Mexican Chihuahua) are not captured. Then, the epistemic uncertainty will increase if a discrimination between cat and dog is to be made based on a picture for a race of a dog that has not been captured by the training model (e.g., Chihuahua). As opposed to aleatoric uncertainty, epistemic uncertainty can be reduced based on re-training the ML model.

Alternatively or additionally to the self-labeling process taking into account the uncertainty of the prediction, the self-labeling process can take into account a probability of the prediction, e.g., a categorial probability associated with the prediction if the ML model is a classifier; or a Gaussian probability distribution associated with the prediction, if the ML model is a regression model (here, the variance corresponds to the uncertainty).

The probability of a prediction is different than the uncertainty of the prediction. The probability measures the likelihood or belief in an inferred outcome, while the uncertainty characterizes the range of possible outcomes due to imperfect information. For instance, categorial probabilities of multiple classes amongst which a deep neural network (as an example implementation of the ML model) discriminates can be obtained from a softmax activation function at an output layer of the deep neural network. Softmax is only one example of an activation function. Other activation functions can be used at the output layer of the deep neural network and it is also possible to obtain categorial probabilities of multiple classes from other types of activation functionsTo give a concrete example of the difference between probability and uncertainty: a deep neural network can be trained to classify images as depicting a "dog" or a "cat". When the deep neural network processes an image that depicts only a dog, the corresponding categorical probability of the "dog" class will be high, while the categorical probability of the "cat" class will be low. The uncertainty is also likely to be relatively low, unless the image is noisy or includes an odd perspective. On the other hand, if the deep neural network processes an image that shows both a dog and a cat, then the categorical probability of the class "dog" will be about 50% and the categorical probability of the class "cat" will be about 50%. The uncertainty would remain unaffected by the picture depicting both the cat and the dog; i.e., is also likely to be relatively low, unless the image is noisy or includes an odd perspective.

According to examples, such aspects of self-labeling processes used to determine pseudo-labels used for populating training datasets at field-deployed agents can be combined with techniques of federated learning. Federated learning facilitates the re-training of an ML model at multiple decentralized agents (also referred to as clients or field-deployed devices) based on their local training dataset; while ensuring that the training datasets remain distributed and private. Instead of transmitting training datasets from agents to a central authority for training, federated learning allows the ML model to be re-trained locally swat each agent, with only the ML model updates (the weights) being sent back to the central authority. The central authority can then consolidate the updated weights obtained from multiple agents.

By inputting a measure of the uncertainty and/or a measure of the probability of the prediction into the self-labeling process, unreliable pseudo-labels may be detected and not be added to a training dataset, i.e., not be considered in a subsequent retraining process. This helps in reducing the potential negative impact of incorrectly labeled samples and ensures better utilization of the output samples for which ground truth is not available.

According to various disclosed examples, it is possible to flexibly implement the training process to be based on training datasets populated based on labels and/or pseudo-labels, respectively. In particular, separate training datasets can be maintained for output samples associated with labels on the one hand, and output samples associated with pseudo-labels on the other hand. Thereby, a training process can be triggered flexibly in all of the following situations: only labels available; only pseudo-labels available; combination of labels and pseudo-labels available.

The disclosed techniques can be combined with concept of federated learning. Here, multiple agents can report their respective updated agent-specific training states of the ML model to a central authority and the central authority can then consolidate these agent-specific training states to obtain an updated consolidated training state of the ML model.

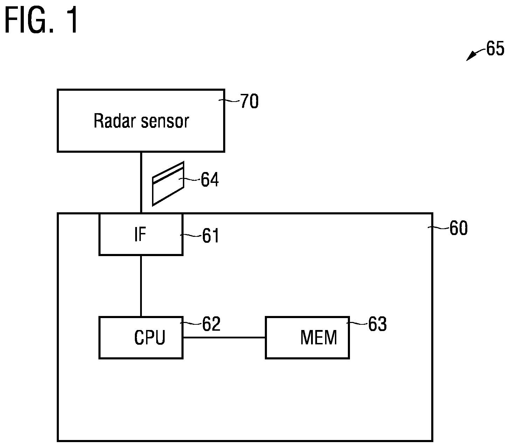

FIG. 1 schematically illustrates an agent 65. The agent 65 is a device that can be deployed in the field. The agent 65 can, accordingly, be referred to as edge-deployed agent 65. For instance, the agent 65 could be a people counting system, a gesture recognition system, a medical imaging apparatus, a surveillance system, etc..

The agent 65 includes a sensor 70 and a processing device 60. In the following, the sensor 70 is exemplified in a nonlimiting manner as a radar sensor and will be referred to as such, but the sensor 70 may be any sensor, such as a depth sensor, a camera, etc..

The processing device 60 can obtain measurement data 64 from the radar sensor 70. A processor 62 - e.g., a general purpose processor (central processing unit, CPU), a field-programmable gated array (FPGA), an application-specific integrated circuit (ASIC) - can receive the measurement data 64 via an interface 61 and process the measurement data 64. For instance, the measurement data 64 could include data frames including samples of an analog-to-digital converter. It would also be possible that further pre-processing is implemented at the radar sensor 70; for instance, the radar sensor 70 could output 2-D spectrograms such as a range-doppler spectrogram or an azimuth-elevation spectrogram or a range time spectrogram or a Doppler time spectrogram or an azimuth time spectrogram or an elevation time spectrogram. Based on such pre-processing, a measurement feature vector (hereinafter simply feature vector) can be determined that encodes the measurement data.

For instance, a typical feature vector determined based on measurement data of the radar sensor 70 includes one or more of the following dimensions: range of a gesture object; velocity of the gesture object (sometimes also referred to as Doppler shift); angular orientation of the gesture object; azimuthal angle of the gesture object; and elevation angle of the gesture object.

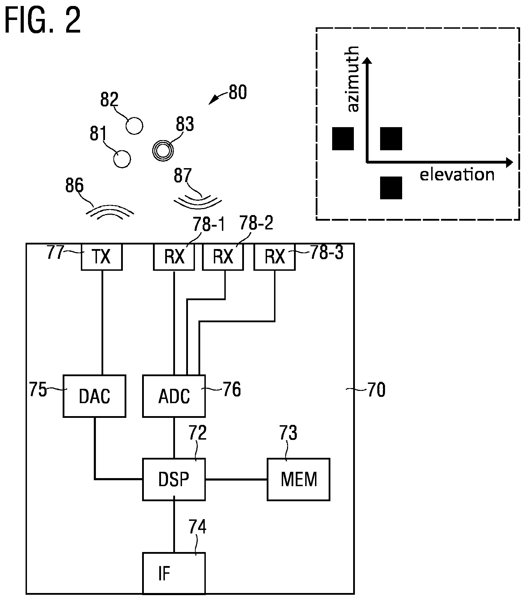

FIG. 2 illustrates aspects with respect to the radar sensor 70. The radar sensor 70 includes a processor 72 (labeled digital signal processor, DSP) that is coupled with a memory 73. Based on program code that is stored in the memory 73, the processor 72 can perform various functions with respect to transmitting radar pulses 86 using a transmit antenna 77 and a digital-to-analog converter (DAC) 75 or a voltage-controlled oscillator. Once the radar pulses 86 have been reflected by a scene 80, respective reflected radar pulses 87 can be detected by the processor 72 using an ADC 76 and multiple receive antenna 78-1, 78-2, 78-3 (e.g., ordered in a L-shape with half a wavelength distance; see inset of FIG. 2). The processor 72 can process raw data samples obtained from the ADC 76 to some larger or smaller degree. For instance, data frames could be determined and output. Also, spectrograms may be determined.

The radar measurement can be implemented as a basic frequency-modulated continuous wave (FMCW) principle. A frequency chirp can be used to implement the radar pulse 86. A frequency of the chirp can be adjusted between a frequency range of 57 GHz to 64 GHz. The transmitted signal is backscattered and with a time delay corresponding to the distance of the reflecting object captured by all three receiving antennas. The received signal is then mixed with the transmitted signal and afterwards low pass filtered to obtain the intermediate signal. This signal is of significant lower frequency as the transmitted signal and therefore the sampling rate of the ADC 76 can be reduced accordingly. The ADC may work with a sampling frequency of 2 MHz and a 12-bit accuracy.

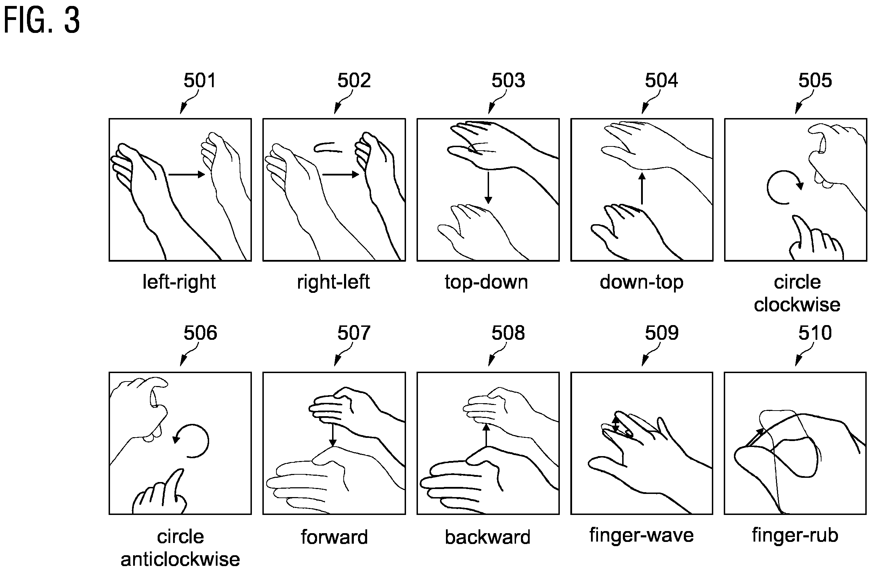

As illustrated, a scene 80 includes multiple objects 81-83. For instance, the objects 81, 82 may correspond to background, whereas the object 83 could pertain to a hand of a user. Based on the radar measurements, gestures performed by the hand can be classified. Some gesture classes between which a discrimination may be possible are illustrated in FIG. 3.

FIG. 3 schematically illustrates such gestures 501-510 and corresponding labels of gesture classes 520, but other gestures are possible. According to the techniques described herein, it is possible to reliably and infer gesture class predictions for such gestures 501-510.

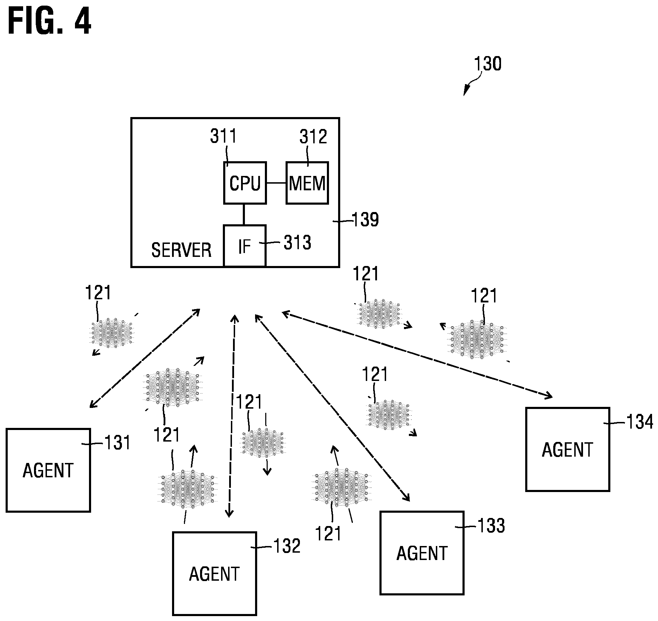

Such gesture class inference can be implemented on an edge-deployed processor such as the processor 62 of the agent 65 (cf. FIG. 1). Nonetheless, also a central server can be part of the overall data handling, as will be explained in connection with FIG. 4.

FIG. 4 schematically illustrates a system 130. The system 130 includes a central server 139 implementing functionality of a central authority. For instance, the central server 139 can be located in a server farm. The central server 139 can be an Internet server that is connected to the Internet.

The central server 139 includes a processor 311 that is coupled to a memory 312. The processor 311 can load program code from the memory 312 and execute the program code to perform techniques as disclosed herein. The processor 311 is also coupled to a communication interface 313. The processor 311 can transmit messages or receive messages via the communication interface. For instance, the server can be coupled to the Internet via the interface 313.

The system 130 also includes multiple agents 131-134 that can also be referred to as clients. The agents 131-134 can each be implemented in accordance with the agent 65 discussed in connection with FIG. 1. The agents 131-134 could be automotive control units (sometimes also referred to as vehicle head unit). The agents 131-134 could be vending machines, e.g., for dispensing train tickets, etc. The agents 131-134 could be gaming consoles.

As illustrated in FIG. 4, the agents 131-134 are communicating with the central server 139, e.g., via the Internet. For instance, a cellular radio access technology can be employed.

According to examples, the central server 139 can provide a downlink message that is indicative of a ML model 121 in a given training state to the agents 131-134. For instance, the downlink message can be indicative of an architecture (e.g., number of layers, skip connections, types of layers, etc.). The weights can be indicated.

Then, the ML model 121 can be employed at each one of the multiple agents 131-134 for inferring a prediction, e.g., a gesture class prediction (cf. FIG. 3). This inference is based on a measurement feature vector that is encoding locally acquired measurement data. For instance, radar measurements can be acquired using a radar sensor.

It is also possible to re-train the ML model 121 at each of the agents 131-134 based on respective training datasets that are locally populated. Thus, the initial training state of the ML model 121 can be updated by edge-deployed re-training at the agents 131-134. Then, uplink messages can be provided by the agents 131-134 to the central server 139, the uplink messages being indicative of weights of the ML model 121 upon completing such re-training, i.e., in the updated training state. This enables the central server 139 to collect such updates from multiple agents 131-134 and combine or specifically average the respective weights of the updated training states of the ML model 121 to determine yet another training state of the ML model 121. This further updated training state of the ML model 121 can then be provided to the agents 131-134 in a further iteration. A respective further downlink message may include an update of the weights; it may not be required to signal all parameters of the ML model, e.g., the architecture may be fixed, the number of layers may be fixed, the type of layers may remain unchanged. As will be appreciated from the above, techniques of federated learning can be employed.

FIG. 4 illustrates that message is indicative of the ML model 121 are exchanged between the agents 131-134 and the central server 139. It is furthermore possible that message is indicative of other information, e.g., auxiliary information and/or context information, a communicated between the agents 131-134 and the central server 139. For instance, the central server 139 may provide auxiliary information to the agents 131-134 that configures the training process executed at the agents 131-134 and/or that configures a self-labeling process executed at the agents 131-134. For instance, the agents 131-134 may provide context information to the central server 139, the context information being indicative of properties of the agent-specific training datasets populated at the agents 131-134.

Furthermore, in a scenario in which the training process is not executed at each of the agents 131-134 (but rather at the central server 139), it would be possible that the agents 131-134 provide their training datasets to the central server 139. Generally, it can be preferable to retain the training datasets at the agents 131-134, e.g., to minimize data transfer and maintain privacy.

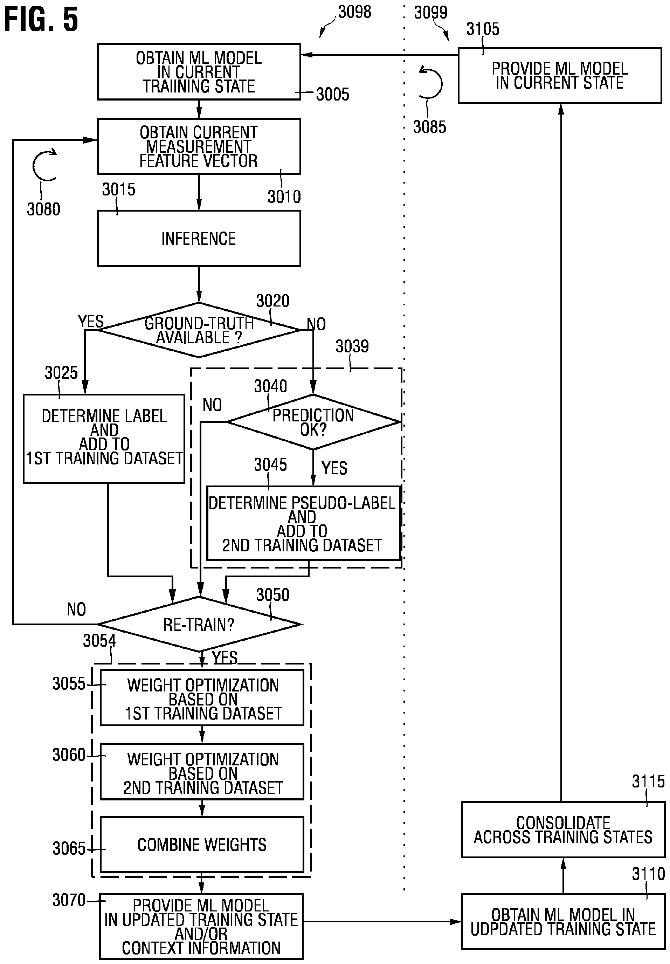

FIG. 5 is a flowchart of a method according to various examples. FIG. 5 generally pertains to employing an ML model for inference at the edge. FIG. 5 further pertains to edge re-training of the ML model. FIG. 5 includes aspects of a self-labeling process. FIG. 5 also pertains to aspects of federated learning.

The method of FIG. 5 includes an iterative process. Multiple iterations 3085 of the overall process can be executed. Each of the iterations 3085 is associated with a respective training state of the ML model distributed to multiple agents. After initializing the central authority and multiple agents, the ML model in an initial (e.g., first) training state is distributed to the agents. The agents re-train the ML model based on labels and pseudo-labels obtained from a self-labeling process. This yields the ML model in an updated agent-specific training state (e.g., second training state) which is then reported back to the central authority (e.g., using an encrypted uplink message). Then, the central authority can consolidate the multiple second training states to determine an updated consolidated training state (e.g., third training state). This serves as the basis for a subsequent iteration 3085, i.e., is distributed to the agents. This iterative process is next explained in a specific implementation in connection with FIG. 5.

In FIG. 5, branch 3098 is executed at each of multiple agents (albeit hereinafter only explained in connection with a single representative agent of the multiple agents). For instance, boxes associated with branch 3098 can be executed by a processor of a respective agent such as processor 62 (cf. FIG. 1), upon loading program code from a memory.

Further, branch 3099 is executed by a central authority, e.g., implemented by a server such as the server 139. A processor such as the processor 311 can load program code from a memory such as the memory 312 and execute the program code to execute boxes of branch 3099.

At box 3105, the central authority provides the ML model in a current training state to multiple agents. This training state is associated with the current iteration 3085.

In a first iteration 3085, an initial training state may be determined, e.g., based on a centralized measurement and training campaign. Also, randomized weights can be used for obtaining an initial training state. The particular choice of the initialization procedure is not germane for the subsequent operation.

Box 3015 may include selecting the agents to which the ML model in the current training state is provided from a plurality of candidate agents. I.e., a subset of all candidate agents may be selected. This selection can be based on availability and/or communication efficiency and/or power consumption and/or state of charge of a battery and/or state of health of battery. For example, it would be possible to avoid update of agents that have a particularly low state of charge of the battery or agents that do not have a direct power supply. This can be done to avoid further draining of the battery or reduced lifetime of such agents.

At box 3005, the ML model is accordingly obtained at the agent. Box 3001 and box 3005 can include communication of a downlink message or multiple downlink messages from the central authority to each of the agents, e.g., via the Internet. Such messages may be encrypted.

At box 3010, a measurement feature vector is obtained at the agent. This defines a current inference iteration 3080. The measurement feature vector is acquired based on one or measurements executed at the agent. The sensor may be a depth sensor such as a radar sensor.

At box 3015, it is possible to perform inference based on the measurement feature vector of box 3010. Thus, a prediction can be inferred based on the measurement feature vector and using the ML model. The measurement feature vector or a representation thereof is input to the ML model. A forward pass of the measurement feature vector through an artificial neural network is executed.

The prediction may be used to control a function of the agent. For instance, a graphical user interface may be controlled. Information associated with the prediction may be output. A technical functionality may be controlled. A control signal may be transmitted.

The prediction can also be used as part of the self-labeling process. This is explained next.

At box 3020, it is determined whether ground truth is available for the prediction inferred at box 3015. For instance, box 3020 may include determining whether a user input indicative of the ground truth associated with the measurement feature vector obtained at box 3010 is available. For example, the user input may confirm the prediction. For instance, the prediction is associated with a certain gesture class, the user may confirm that the gesture class has been correctly predicted. It would also be possible that the user input amends the prediction. For instance, the prediction may pertain to the segmentation of a region of interest in an image. A user may then change certain partitions or sections thereof. Then, the amended segmentation can be considered as ground truth.

Ground truth may not only be available through a user input. For instance, sometimes ground truth can be determined based on an alternative measurement (i.e., using another measurement modality than the measurement modality used for determining the measurement feature vector at box 3010). Such alternative measurement may only be available in the certain circumstances. For instance, a radar sensor may be used for depth measurements; a depth measurement may be also possible based on a stereo-vision camera, but only under daylight scenarios. During nighttime, the alternative depth measurement may not be available.

As a general rule, ground truth may be determined based on at least one of a user input or a reference measurement.

Responsive to the ground truth being available, box 3025 is executed. Here, a label is determined based on the ground truth. The label may equate to the ground truth or be derived from the ground truth. The measurement feature vector and the associated label are added as input-output sample pair to a first training dataset. This first training dataset collects pairs of input samples and output samples where the output samples correspond to labels.

Responsive to the ground truth not being available at box 3020, the self-labeling process is executed at box 3039.

There are various options for implementing the self-labeling process at box 3039. One example is illustrated in FIG. 5.

In FIG. 5, the self-labeling process includes box 3040. Box 3040 is optional. At box 3040, it is determined whether a pseudo-label is to be determined based on the prediction inferred at box 3015 for the measurement feature vector. Various decision criteria are conceivable for box 3040.

For instance, if the prediction inferred at box 3015 is associated with a significant uncertainty, it may be judged that the pseudo-label is not to be reliably determined. For instance, it would be possible that pseudo-labels are selectively determined if the uncertainty - epistemic uncertainty and/or the aleatoric uncertainty - of the respective prediction determined that the current iteration 3080 of box 3015 is below a predefined threshold. For instance, it would be possible to determine whether the uncertainty $\hat{u}_i$ of a prediction determined for a sample $i$ is smaller than a threshold $\tau$, i.e., $\hat{u}_i < \tau_u$.

Alternatively or additionally to considering the uncertainty at box 3040, it would be possible to take into account probabilities of the respective prediction inferred at the current iteration 3080 of box 3015. For instance, it would be possible to consider whether the categorial probabilities of a classifier ML model have a variation that exceeds a certain threshold, i.e., a given class is significantly more probable that other classes. In another example, it would be possible to determine whether one of the categorial probabilities associated with the current prediction exceeds a certain predefined threshold. For instance, it would be possible to determine $max_{c'} \hat{p}_{i,c'}$ is larger than a threshold, i.e., $max_c, \hat{p}_{i,c} > \tau_p$. Here, $\hat{p}_{i,c}$ is the predicted probability of input sample i (a measurement feature vector) belonging to class cbased on the prediction, i.e., the output of the ML model. $max_c, \hat{p}_{i,c}$ is the maximum predicted probability across all classes for sample $i$. It is determined whether this maximum predicted probability exceeds the threshold.

The ML model may perform a classification. Such a classification is associated with multiple categorial probabilities. The ML model is trained to discriminate between multiple classes. To do so, categorial probabilities for each of the multiple classes are determined. The particular class having the highest categorial probability is then selected as the predicted class. For instance, for an implementation of the ML model by a deep neural network, such categorial probabilities can be obtained at the output layer of the deep neural network that applies a softmax activation function. The softmax activation function takes a vector as input and converts its individual values into probabilities, depending on their size. A high numerical value leads to a high categorial probability. A sum of the categorial probabilities is normalized to 1.

For instance, such thresholds for the uncertainty ($\tau_u$) and/or the probability ($\tau_p$) can be pre-defined. The threshold may be determined by the central authority. Information indicative of one or more such thresholds can be provided by the central authority as auxiliary information to the agents.

For instance, such thresholds for the uncertainty ($\tau_u$) and/or the probability ($\tau_p$) can be agent specific; i.e., different agents can have different thresholds.

For instance, such thresholds for the uncertainty ($\tau_u$) and/or the probability ($\tau_p$) can be determined based on a trustworthiness associated with each agent. For instance, some agents may be known to produce high quality data; this can be reflected in the thresholds being configured to accept more pseudo-labels.

It would be possible that such thresholds for the uncertainty ($\tau_u$) and/or the probability ($\tau_p$) are dependent on the iteration 3085 (this may be referred to as dynamic thresholds). The threshold(s) may vary as a function of the iteration 3085. An example linear dependency of the threshold from a value $\tau_{start}$ to a value $\tau_{end}$ over a certain decay_duration is shown in Equation 1. Current_step denotes the iteration 3085.

$$\tau = \max \left( \tau_{\text{start}} + \frac{\tau_{\text{end}} - \tau_{\text{start}}}{\text{decay\_duration}} \times \text{current\_step}, \tau_{\text{end}} \right)$$

<div align="right">Equation 1</div>

Upon determining that the pseudo-label can be reliably determined, box 3045 is executed; else, box 3045 is skipped (i.e., the measurement feature vector can be discarded in the context of the re-training) . At box 3045, the pseudo-label is determined based on the prediction of box 3015 and a second training dataset is populated by adding, as pair of input sample and output sample, the current measurement feature vector of the current iteration 3080 of box 3010 and the pseudo-label determined at box 3045 thereto.

The pseudo-label for a sample *i* can be determined as follows:

$$\hat{y}_{i,c} = \begin{cases} 1 & \text{if } c = \arg\max_{c'} \hat{p}_{i,c'} \\ 0 & \text{otherwise} \end{cases}$$

<div align="right">Equation 2</div>

$\arg\max_{c}, \hat{p}_{i,c}$ is the index of the class with the highest predicted probability for sample *i*. I.e., the pseudo-label is determined based on the categorial probabilities, by selecting the class having the largest categorial probability.

The second training dataset populated at multiple inference iterations 3080 of box 3045 is different from the first training dataset populated at multiple iterations 3080 of box 3025. Accordingly, two separate agent-specific training sets are retained at each agent for labels and pseudo-labels, respectively. These two training datasets can have different sizes. Typically, labels are more sparsely available if compared to pseudo-labels. Accordingly, there may be a tendency that the first training dataset populated at the multiple iteration 3080 of box 3025 has a smaller size of compared to the second training dataset populated in the multiple iterations 3080 of box 3045.

By maintaining separate training datasets populated based on labels and pseudo-labels, respectively, multiple effects can be achieved. As a first effect, it is possible to flexibly handle situations in which either the only labels are available, or only pseudo-labels are available, or, both, labels and pseudo-labels are available. In particular, re-training of the ML model does not need to be delayed until, both, labels and pseudo-labels are available. This facilitates accurate and flexible re-training of the ML model under various circumstances encountered in the field. As a second effect, by maintaining different training datasets populated based on labels and pseudo-labels, respectively, it is possible to flexibly tailor the impact of the pseudo-labels onto the training process. For instance, pseudo-labels may be considered more prominently or less prominently depending on a trustworthiness level associated with the respective agent. For instance, it would be possible to more prominently consider pseudo-labels for later iterations 3085; this is under the assumption that for later iterations 3085 the overall accuracy of the ML model increases so that along with the overall accuracy of the ML model also the reliability of the pseudo-labels increases. Such effects will be become apparent in connection with the subsequent boxes.

At box 3050, it is determined whether a re-training is possible. For instance, box 3050 may include determining a size of at least one of the first training dataset populated at multiple iterations 3080 of box 3025 or a size of the second training dataset populated at multiple iterations 3080 of box 3045. A re-training trigger provided by the central authority may be monitored.

For example, retraining at box 3050 may also be skipped for such agents that have a particularly low state of charge of their battery. It would be possible to skip the training process for agents that are not connected to a power grid or have no other direct power supply. Such techniques are based on the finding that executing a training process is particularly energy intensive, due to the large number of compute operations required. Accordingly, it would be possible to postpone retraining or altogether skip retraining the ML model in case of limited energy resources.

If retraining is not possible, a further inference iteration 3080 is executed, i.e., a new current measurement feature vectors obtained at box 3010.

Else, a training process is executed at box 3054. The training process yields an updated training state of the ML model.

The retraining is based on the first training dataset and the second training dataset.

Multiple options for executing the retraining are possible.

For instance, separate backpropagation optimizations can be executed based on the first training dataset and the second training dataset. This is illustrated in box 3055 and box 3060. At box 3055, first updated weights of the ML model in the current training state as obtained in the current iteration 3085 of box 3005 are determined, based on the first training dataset. The first training dataset can then be flushed.

The loss function for box 3055 can be:

$$\mathcal{L}_S = -\frac{1}{N} \sum_{i=1}^{N} \sum_{c=1}^{C} y_{i,c} \log(\hat{p}_{i,c})$$

<div align="right">Equation 3</div>

Here, N is the number of labeled samples in the first training dataset, C is the number of classes in the classification problem, $y_{i,c}$ is the label for sample I and class c. It represents whether sample i belongs to class c (1 if True, 0 otherwise). $\hat{p}_{i,c}$ is the predicted probability of sample I belonging to class c. It is the output of the model's softmax function, representing the model's confidence in the predicted class probabilities. It should be understood that the loss function given by Equation 3 is only one example and other examples are possible. Various loss functions are known in the art and can be employed in accordance with the various disclosed scenarios.

At box 3060, second updated weights of the ML model either in the current training state as obtained in the current iteration 3085 of box 3005 or updated based on the first updated weights from box 3055 are determined. This optimization of box 3060 is based on the second training dataset. The second training dataset can then be flushed.

The loss function of box 3060 can be denoted as follows:

$$\mathcal{L}_{\mathrm{u}} = -\frac{1}{N} \sum_{i=1}^{N} \sum_{c=1}^{C} \hat{y}_{i,c} \log(\hat{p}_{i,c})$$

<div align="right">Equation 4</div>

$\hat{y}_{i,c}$ is the generated pseudo-label for sample i and class c. It represents the model prediction of sample I belonging to class c. $\hat{p}_{i,c}$ is the predicted probability of sample $i$ belonging to class c based on the ML model's output.

At box optional 3065, if separate updated sets of weights are present (from box 3055 and from box 3060), then these weights can be combined. For instance, a weighted combination can be executed. For instance, a weighted average between the weights can be of the weights determined at box 3055 in the weights determined at box 3060 can be determined.

More generally, it is possible that the second training state determined as an output of box 3054 is determined taking into account a relative weighting of an impact of the first training dataset (populated in multiple inference iterations 3080 of box 3025 based on labels) on the second training state, vis-à-vis the impact of the second training dataset (populated in multiple inference iteration 3080 of box 3045 based on pseudo-labels) on the second training state. A respective weighting regulating the impact of labels and pseudo-labels, respectively, can be fixedly predefined, can be provided by the central authority, e.g., an auxiliary information, and/or can be dynamic, i.e., depend on the iteration 3085. The relatively weighting can progressively increase an impact of the pseudo-labels for later iterations 3085 (along with the increased accuracy of the ML model).

For instance, let $\varepsilon$ be the weighting factor regulating the impact of the second training dataset populated based on pseudo-labels, then it would be possible that $\varepsilon$ is given by:

$$\epsilon = \min\left(\epsilon_{\mathrm{start}} + \frac{\epsilon_{\mathrm{end}} - \epsilon_{\mathrm{start}}}{\mathrm{growth\_duration}} \times \mathrm{current\_step}, \epsilon_{\mathrm{end}}\right)$$

<div align="right">Equation 5</div>

ε(start) is the initial value of epsilon (at the first iteration 3085). ε(end) is the final value of epsilon (at the final iteration 3085). growth_duration is the number of iterations 3085 over which epsilon will grow. current_step is the current iteration 3085. Equation 5 gradually increases ε from ε(start) to ε(end) over the course of growth duration.

Then, at box 3070, the ML model in the updated second training state as obtained from box 3065 can be provided to the central authority.

For instance, an incremental update can be provided that indicates differences between the weights of the ML model in the updated training state obtained from the retraining process executed at box 3054 vis-à-vis the weights of the ML model in the training state obtained at box 3005. More generally, it would be possible that information indicative of the weights obtained at box 3055, and/or information indicative of the weights obtained at box 3060, and/or information indicative of the resulting updated training state (e.g., the combined weights obtained from box 3065) is provided to the central authority.

Optionally, it is possible to provide context information to the central authority at box 3070. Such context information can include an indication of the size of the first training dataset and/or an indication of a size of the second training dataset and/or a ratio of such sizes and/or an indication of a weighting factor for relatively weighting and impact of the first training dataset vis-à-vis the second training dataset.

The central authority obtains the ML model in the updated training state at box 3110. More specifically, the central authority obtains the ML model in multiple updated training states at box 3110 from multiple agents. Accordingly, box 3115, these multiple updated and agent-specific training states can be consolidated (e.g., averaged) - which is referred to as federated learning - to determine a new and improved current training state of the ML model in a further iteration 3085 of box 3105.

For instance, the consolidation at box 3115 can take into account context information provided from each of the agents. For instance, it would be possible to relatively weigh the impact of the respective updated training states of the communicated weights depending on the size of the underlying training datasets and/or depending on whether the respective updated training state has been primarily determined based labels or pseudo-labels, respectively. Again such weighting can depend on the iteration 3085.

Summarizing, FIG. 5 illustrates aspects with respect to retraining of an ML model taking into account pseudo-labels determined in a self-labeling process at box 3039. The self-labeling process executed at box 3039 takes into account probabilities and/or uncertainties of the prediction of box 3015. Conventional self-labeling processes achieve worse results because poor network calibration and poor quality of data produce pseudo-labeled samples incorrectly, leading to noisy training datasets and, in turn, poor generalization of the ML model. To remedy this, selecting predictions for pseudo-labels with low uncertainty and/or high probability dramatically reduces the effect of poor calibration and falsely assigned pseudo-labels. Uncertainty classification attempts to maintain the simplicity, generality, and ease of implementation of classical pseudo-labeling while addressing the calibration issue to improve pseudo-labeling performance drastically.

There are different options available for determining the uncertainty. These options are summarized in TAB. 1:

TAB. 1: Options for determining uncertainty.

| 1 | Sensor data |
|---|---|
| 2 | Stochastic dropout sampling |
| 3 | Ensemble sampling |
| 4 | Evidential distribution |
| 5 | Bayesian neural network |

It would be possible to determine the uncertainty, more specifically the aleatoric uncertainty, based on sensor information provided by the sensor. This is shown in example 1 of TAB. 1.

Regarding TAB. 1, example 2, it would be possible to determine the uncertainty based on stochastic dropout sampling, e.g., Monte-Carlo dropout sampling. Such stochastic dropout sampling includes multiple forward passes through the ML model, wherein for each of the multiple forward passes a random subset of weights or interconnections (neurons in a deep neural network) are disabled / set to zero, i.e., temporarily removed from the ML model. By performing multiple forward passes, multiple predictions are obtained. The variation of the predictions is a measure of the uncertainty.

Further, it would be possible to determine the uncertainty (more specifically the epistemic uncertainty) based on ensemble sampling of the distribution of the respective prediction. See TAB. 1, example 3. Here, an ensemble of multiple instances of the ML models is determined based on the current training state of the ML model, by randomized variation of the weights. A single input sample (measurement feature vector) is the forward-passed through these multiple instances - which yields multiple predictions. The variation of the predictions is a measure of the uncertainty.

For such scenarios according to TAB. 1, examples 2 and 3, of stochastic dropout sampling or ensemble sampling, the uncertainty can be determined as follows:

$$\hat{p}_{i,c} = \frac{1}{K} \sum_{k=1}^{K} \hat{p}_{i,c}^{(k)}$$

$$\hat{u}_i = \frac{1}{K} \sum_{k=1}^{K} Var(\hat{p}_{i,c}^{(k)})$$

Equation 6

$\hat{p}_{i,c}$ is again the predicted probability of sample $i$ belonging to class $c$ based on the ML model's output. K is the number of ML models in the ensemble or the number of Monte-Carlo dropout masks. $\hat{p}_{i,c}^{(k)}$ is the probability predicted by the k-th classifier or number of Monte Carlo samples (dropout masks) generated during the inference for sample $i$

belonging to class $c$ . $\widehat{u}_\iota$ , represents the estimated uncertainty for sample $i$.

Also, as shown in TAB. 1, example 4, the uncertainty can be determined based on an evidential distribution of the respective predictions. The evidential distribution can be predicted by the ML neural network for the respective measurement feature vectors. Determining the uncertainty based on the evidential distribution may only require a single forward-pass of the ML neural nework; hence, such uncertainty is sometimes labeled "single-pass uncertainty".

Evidential Deep Learning (EDL) is a concept disclose in Sensoy, Murat, Lance Kaplan, and Melih Kandemir. "Evidential deep learning to quantify classification uncertainty." Advances in neural information processing systems 31 (2018) and can be combined with pseudo-labeling to leverage uncertainty estimates for more reliable and effective semi-supervised learning. The concept of EDL stems from the Dempster-Shafer Theory of Evidence. It assigns belief masses to subsets within a frame of discernment, representing possible states or class labels. And these belief assignments can be estimated using the Dirichlet Distribution, enabling the quantification of belief masses and uncertainty within a defined framework. Each frame consists of K mutually exclusive singletons (e.g., class labels), each assigned a belief mass ($b_k$), while an overall uncertainty mass ($u$) is determined. The belief mass for a singleton ($b_k$) is computed using the evidence ($e_k$), and uncertainty ($u$) is inversely proportional to the total evidence. The formulas for belief and uncertainty are as follows:

Belief mass for a singleton:

$$b_k = \frac{e_k}{S}$$

Uncertainty:

$$u = \frac{K}{S}$$

Here, S represents the sum of the evidence values for all singletons in the frame, given by

$$S = \sum_{i=!}^{K} (e_i + 1)$$

It is important to note that when no evidence is available, the belief for each singleton is zero, and the uncertainty is at its maximum (one).

In EDL, a loss function is incorporated that combines two terms in particular.

$$\mathcal{L}(\Theta) = \sum_{i=1}^{N} \mathcal{L}_i(\Theta) + \lambda_t \sum_{i=1}^{N} KL[D(\mathbf{p_i}|\tilde{\alpha}_i) \,\|\, D(\mathbf{p_i}|\langle 1, \ldots, 1\rangle)],$$

where $\lambda_t = min(1.0, t/10) \in [0,1]$ is the annealing coefficient, $t$ is the index of the current training epoch, $D(p_i|\langle 1,...,1\rangle)$ is the uniform Dirichlet distribution, and $\tilde{\alpha}_i = y_i + (1 - y_i) \odot \alpha_i$ are the parameters of the Dirichlet distributions after removal of non-misleading evidence from predicted parameters $\alpha_i$ for sample $i$.

First term is inspired from the sum of squares loss represented as

$$\mathcal{L}_i(\Theta) = \sum_{j=1}^{K} (y_{ij} - \mathbb{E}[p_{ij}])^2 + \mathrm{Var}(p_{ij})$$

$$= \sum_{j=1}^{K} \underbrace{(y_{ij} - \alpha_{ij}/S_i)^2}_{\mathcal{L}_{ij}^{err}} + \underbrace{\frac{\alpha_{ij}(S_i - \alpha_{ij})}{S_i^2(S_i + 1)}}_{\mathcal{L}_{ij}^{var}}$$

$$= \sum_{j=1}^{K} (y_{ij} - \hat{p}_{ij})^2 + \frac{\hat{p}_{ij}(1 - \hat{p}_{ij})}{(S_i + 1)}.$$

This loss helps minimize the prediction error and the variance of the Dirichlet distribution generated by the neural network. This term also prioritizes model fit over the calculation of variance. The second term of the loss function is a penalizing factor represented by the Kullback-Leibler (KL) Divergence term. This term is responsible for penalizing instances that do not contribute to the overall data fit.

$$KL[D(\mathbf{p}_i|\tilde{\boldsymbol{\alpha}}_i) \| D(\mathbf{p}_i|\mathbf{1})]$$
$$= \log\left(\frac{\Gamma(\sum_{k=1}^{K}\tilde{\alpha}_{ik})}{\Gamma(K)\prod_{k=1}^{K}\Gamma(\tilde{\alpha}_{ik})}\right) + \sum_{k=1}^{K}(\tilde{\alpha}_{ik}-1)\left[\psi(\tilde{\alpha}_{ik}) - \psi\left(\sum_{j=1}^{K}\tilde{\alpha}_{ij}\right)\right],$$

Probabilistic ML, such as those based on Bayesian neural networks (cf. TAB. 1: example 5) or ensembles, can provide uncertainty estimates for their predictions.

Various modifications to the method of FIG. 5 are possible. For instance, box 3070 is optional. It is not required in all scenarios that the agents report back to the central authority. Techniques of Federated learning are optional.

Furthermore, instead of executing the training process at the agents, the training process can also be executed at the central authority. In such a scenario, the training datasets can be communicated from the agents to the central authority. Then, box 3054 can be executed at the central authority.

Summarizing, at least the following EXAMPLES have been disclosed.

EXAMPLES

EXAMPLES 1. A computer-implemented method for use in an agent (65, 131, 132, 133, 134), comprising:

- obtaining, from a central authority (139), a machine-learning model (121) in a first training state,
- using the machine-learning model (121) in the first training state to infer (3015) predictions based on multiple measurement feature vectors obtained at the agent (65, 131, 132, 133, 134),
- based on the predictions, populating (3025) a first training dataset using labels for a first subset of the multiple measurement feature vectors,
- based on the predictions, populating (3045) a second training dataset using pseudo-labels for a second subset of the multiple measurement feature vectors, and
- determining (3054) a second training state of the machine-learning model (121) based on the first training dataset and the second training dataset.

EXAMPLES 2. The computer-implemented method of EXAMPLE 1, further comprising:

- selectively (3040) determining the pseudo-labels if uncertainties of the predictions are below a threshold.

EXAMPLES 3. The computer-implemented method of EXAMPLE 2,

wherein the machine-learning model (121) is obtained from the central authority (139) in an iterative update process subsequently providing multiple training states of the machine-learning model (121),
wherein the threshold is dependent on an iteration (3085) of the iterative update process.

EXAMPLES 4. The computer-implemented method of EXAMPLE 2 or 3, further comprising:

- determining the uncertainties based on at least an evidential distribution of the respective predictions, the evidential distribution being predicted by the machine-learning model for the respective measurement feature vectors.

EXAMPLES 5. The computer-implemented method of any one of EXAMPLEs 2 to 4, further comprising:

- determining the uncertainties based on at least one of stochastic dropout sampling or ensemble sampling of a distribution of the respective prediction.

EXAMPLES 6. The computer-implemented method of any one of the preceding EXAMPLEs, further comprising:

- selectively (3040) determining the pseudo-labels depending on probabilities of the predictions.

EXAMPLES 7. The computer-implemented method of EXAMPLE 6,

wherein determination of the pseudo-labels is executed if the probabilities of the predictions exceed a threshold, wherein the machine-learning model (121) is obtained from the central authority in an iterative update process subsequently providing multiple training states of the machine-learning model (121), wherein the threshold is dependent on an iteration (3085) of the iterative update process.

EXAMPLES 8. The computer-implemented method of any one of the preceding EXAMPLEs, further comprising:

- determining first updated weights of the machine-learning model based on the first training dataset,
- determining second updated weights of the machine-learning model based on the second training dataset, and
- determining the second training state by performing a combination of the first updated weights and the second updated weights.

EXAMPLES 9. The computer-implemented method of any one of the preceding EXAMPLEs, wherein the second training state is determined taking into account a relative weighting of an impact of the first training dataset on the second training state if compared to an impact of the second training dataset on the second training state.
EXAMPLES 10. The computer-implemented method of EXAMPLE 9, wherein the relative weighting depends on auxiliary information provided by the central authority.
EXAMPLES 11. The computer-implemented method of EXAMPLE 9 or 10,

wherein the machine-learning model (121) is obtained from the central authority in an iterative update process subsequently providing multiple training states of the machine-learning model (121), wherein the relative weighting depends on an iteration (3085) of the iterative update process.

EXAMPLES 12. The computer-implemented method of EXAMPLE 11, wherein the relative weighting progressively increases the impact of the second training dataset on the second training state for subsequent iterations (3085).
EXAMPLES 13. The computer-implemented method of any one of the preceding EXAMPLEs, further comprising:

- providing least one of the first weights, the second weights, or information indicative of the second training state to the central authority.

EXAMPLES 14. The computer-implemented method of any one of the preceding EXAMPLEs, further comprising:

- providing, to the central authority, information indicative of at least one of a first size of the first training dataset, a second size of the second training dataset, or a weighting factor regulating a relative impact of the first training dataset and the second training dataset on the second training state.

EXAMPLES 15. The computer-implemented method of any one of the preceding EXAMPLEs, further comprising:

- determining (3020) whether ground truth associated with a given measurement feature vector is available, and:

  - responsive to the ground truth being available: determining (3025) the respective label for the given measurement feature vector based on the ground truth and adding the given measurement feature vector and the respective label to the first training dataset,
  - responsive to the ground truth not being available and further responsive to determining that a pseudo-label can be determined for the given measurement feature vector: adding the given measurement feature vector and the respective pseudo-label to the second training dataset, and
  - responsive to the ground truth not being available and further responsive to determining that a pseudo-label cannot be determined for the given measurement feature vector: discarding the given measurement feature vector.

EXAMPLES 16. A computer-implemented method for use in a central authority, comprising:

- providing (3105), to multiple agents (65, 131, 132, 133, 134), a machine-learning model in a first training state, each of the multiple agents (65, 131, 132, 133, 134) performing the method of any one of the preceding EXAMPLEs,
- obtaining (3110), from each of the multiple agents (65, 131, 132, 133, 134), information indicative of the machine-learning model in the second training state, and
- determining (3115) a third training state of the machine-learning model based on the multiple second training states.

EXAMPLES 17. The computer-implemented method of EXAMPLE 16, further comprising:

- obtaining, from each of the multiple agents, context information for the machine-learning model in the respective second training state,

wherein said determining of the third training state of the machine-learning model is further based on the context information.

EXAMPLES 18. The computer-implemented method of EXAMPLE 17, wherein the context information is indicative of at least one of a size of a first training dataset used for determining the second training state and populated using labels, a size of a second training dataset used for determining the second training state and populated using pseudo-labels, a relative size of the first training dataset with respect to the second training dataset.

EXAMPLES 19. An agent (65, 131, 132, 133, 134) comprising a compute circuitry configured to:

- obtain, from a central authority (139), a machine-learning model (121) in a first training state,
- use the machine-learning model (121) in the first training state to infer (3015) predictions based on multiple measurement feature vectors obtained at the agent (65, 131, 132, 133, 134),
- based on the predictions, populate (3025) a first training dataset using labels for a first subset of the multiple measurement feature vectors,
- based on the predictions, populate (3045) a second training dataset using pseudo-labels for a second subset of the multiple measurement feature vectors, and
- determine (3054) a second training state of the machine-learning model (121) based on the first training dataset and the second training dataset.

EXAMPLES 20. The agent of EXAMPLE 19, wherein the compute circuitry is configured to perform the method of any one of EXAMPLEs 1 to 15.

EXAMPLES 21. A central authority comprising a compute circuitry configured to:

- provide (3105), to multiple agents (65, 131, 132, 133, 134), preferably multiple agents configured in accordance with the agent of EXAMPLE 19, a machine-learning model in a first training state,
- obtain (3110), from each of the multiple agents (65, 131, 132, 133, 134), information indicative of the machine-learning model in a respective second training state, and
- determine (3115) a third training state of the machine-learning model based on the multiple second training states.

EXAMPLES 22. The central authority of EXAMPLE 21, wherein the compute circuitry is configured to perform the method of any one of EXAMPLEs 16 to 18.

EXAMPLES 23. A system comprising multiple agents configured in accordance with the agent of EXAMPLE 19 and the central authority of EXAMPLE 21.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above various techniques have been disclosed in which a self-labeling process to determine pseudo-labels is executed at field deployed agents. However, such self-labeling processes that take into account uncertainties of the respective predictions used to determine the pseudo-labels and/or that take into account categorial probabilities of the respective predictions used to determine the pseudo-labels can also be executed at a central authority.

Furthermore, various examples have been disclosed, according to which measurement feature vectors encoding radar measurements are processed. However, techniques as disclosed herein can also be applied to other types and kinds of sensors, e.g., other types of depth sensors.

**Claims**

1. A computer-implemented method for use in an agent (65, 131, 132, 133, 134), comprising:

   - obtaining, from a central authority (139), a machine-learning model (121) in a first training state,
   - using the machine-learning model (121) in the first training state to infer (3015) predictions based on multiple measurement feature vectors obtained at the agent (65, 131, 132, 133, 134),
   - based on the predictions, populating (3025) a first training dataset using labels for a first subset of the multiple measurement feature vectors,
   - based on the predictions, populating (3045) a second training dataset using pseudo-labels for a second subset of the multiple measurement feature vectors, and
   - determining (3054) a second training state of the machine-learning model (121) based on the first training dataset and the second training dataset.

2. The computer-implemented method of claim 1, further comprising:

   - selectively (3040) determining the pseudo-labels if uncertainties of the predictions are below a threshold.

3. The computer-implemented method of claim 2,

   wherein the machine-learning model (121) is obtained from the central authority (139) in an iterative update process subsequently providing multiple training states of the machine-learning model (121),
   wherein the threshold is dependent on an iteration (3085) of the iterative update process.

4. The computer-implemented method of claim 2 or 3, further comprising:

   - determining the uncertainties based on at least an evidential distribution of the respective predictions, the evidential distribution being predicted by the machine-learning model for the respective measurement feature vectors.

5. The computer-implemented method of any one of claims 2 to 4, further comprising:

   - determining the uncertainties based on at least one of stochastic dropout sampling or ensemble sampling of a distribution of the respective prediction.

6. The computer-implemented method of any one of the preceding claims, further comprising:

   - selectively (3040) determining the pseudo-labels depending on probabilities of the predictions.

7. The computer-implemented method of claim 6,

   wherein determination of the pseudo-labels is executed if the probabilities of the predictions exceed a threshold,
   wherein the machine-learning model (121) is obtained from the central authority in an iterative update process subsequently providing multiple training states of the machine-learning model (121),
   wherein the threshold is dependent on an iteration (3085) of the iterative update process.

8. The computer-implemented method of any one of the preceding claims, further comprising:

   - determining first updated weights of the machine-learning model based on the first training dataset,
   - determining second updated weights of the machine-learning model based on the second training dataset, and
   - determining the second training state by performing a combination of the first updated weights and the second updated weights.

9. The computer-implemented method of any one of the preceding claims,
   wherein the second training state is determined taking into account a relative weighting of an impact of the first training dataset on the second training state if compared to an impact of the second training dataset on the second training state.

10. The computer-implemented method of claim 9,
wherein the relative weighting depends on auxiliary information provided by the central authority.

11. The computer-implemented method of claim 9 or 10, wherein the machine-learning model (121) is obtained from the central authority in an iterative update process subsequently providing multiple training states of the machine-learning model (121),
wherein the relative weighting depends on an iteration (3085) of the iterative update process.

12. The computer-implemented method of claim 11,
wherein the relative weighting progressively increases the impact of the second training dataset on the second training state for subsequent iterations (3085).

13. The computer-implemented method of any one of the preceding claims, further comprising:

- providing least one of the first weights, the second weights, or information indicative of the second training state to the central authority.

14. The computer-implemented method of any one of the preceding claims, further comprising:

- providing, to the central authority, information indicative of at least one of a first size of the first training dataset, a second size of the second training dataset, or a weighting factor regulating a relative impact of the first training dataset and the second training dataset on the second training state.

15. The computer-implemented method of any one of the preceding claims, further comprising:

- determining (3020) whether ground truth associated with a given measurement feature vector is available, and:

- responsive to the ground truth being available: determining (3025) the respective label for the given measurement feature vector based on the ground truth and adding the given measurement feature vector and the respective label to the first training dataset,
- responsive to the ground truth not being available and further responsive to determining that a pseudo-label can be determined for the given measurement feature vector: adding the given measurement feature vector and the respective pseudo-label to the second training dataset, and
- responsive to the ground truth not being available and further responsive to determining that a pseudo-label cannot be determined for the given measurement feature vector: discarding the given measurement feature vector.

## FIG. 1

65

Radar sensor — 70

64

IF — 61

60

CPU — 62    MEM — 63

# FIG. 2

# FIG. 3

| 501 | 502 | 503 | 504 | 505 |
|-----|-----|-----|-----|-----|
| left-right | right-left | top-down | down-top | circle clockwise |

| 506 | 507 | 508 | 509 | 510 |
|-----|-----|-----|-----|-----|
| circle anticlockwise | forward | backward | finger-wave | finger-rub |

EP 4 560 538 A1

# FIG. 4

# FIG. 5

```
                              3098 ┊ 3099
                                   ┊          3105
        ┌─────────────────┐        ┊       ┌──────────────────┐
        │ OBTAIN ML MODEL │◄───────────────│ PROVIDE ML MODEL │
        │    IN CURRENT   │        ┊  ↻    │  IN CURRENT STATE│
        │  TRAIINING STATE│        ┊       └──────────────────┘
        └─────────────────┘──3005  ┊
                 │                 3085
                 ▼
        ┌─────────────────┐
        │ OBTAIN CURRENT  │
        │   MEASUREMENT   │
        │  FEATURE VECTOR │
        └─────────────────┘
      3015        │        3010
       ↻          ▼
     3080 ┌─────────────────┐
          │    INFERENCE    │
          └─────────────────┘
```

3015   3010

INFERENCE

YES  GROUND-TRUTH  NO        3020
       AVAILABLE ?

3039

3025

DETERMINE LABEL
AND
ADD TO
1ST TRAINING DATASET

NO    3040    PREDICTION
               OK?

3045    YES

DETERMINE PSEUDO-LABEL
AND
ADD TO
2ND TRAINING DATASET

NO    3050

RE-TRAIN?

3054    YES

3055   WEIGHT OPTIMIZATION
       BASED ON
       1ST TRAINING DATASET

3060   WEIGHT OPTIMIZATION
       BASED ON
       2ND TRAINING DATASET

3065   COMBINE WEIGHTS

3070   PROVIDE ML MODEL
       IN UPDATED TRAINING STATE
       AND/OR
       CONTEXT INFORMATION

3115   CONSOLIDATE
       ACROSS TRAINING STATES

3110   OBTAIN ML MODEL IN
       UPDDATED TRAINING STATE

| Europäisches Patentamt European Patent Office Office européen des brevets | **EUROPEAN SEARCH REPORT** | Application Number EP 23 21 2337 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AKBARI ALI ET AL: "Personalizing Activity Recognition Models Through Quantifying Different Types of Uncertainty Using Wearable Sensors", IEEE TRANSACTIONS ON BIOMEDICAL ENGINEERING, IEEE, USA, vol. 67, no. 9, 2 January 2020 (2020-01-02), pages 2530-2541, XP011805651, ISSN: 0018-9294, DOI: 10.1109/TBME.2019.2963816 [retrieved on 2020-08-19] * sections III, VI; pages 3,4,6; figure 1 * | 1-15 | INV. G06N3/09 G06N3/098 G06N20/00 G06N20/20 |
| A | US 2021/406644 A1 (SALMAN NADER [US] ET AL) 30 December 2021 (2021-12-30) * claim 1 * | 1-15 | |

TECHNICAL FIELDS SEARCHED (IPC)

G06N

The present search report has been drawn up for all claims

| Place of search | Date of completion of the search | Examiner |
|---|---|---|
| Munich | 15 May 2024 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2337

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2024

| Patent document cited in search report | Publication date | Patent family member(s) | Publication date |
|---|---|---|---|
| US 2021406644 A1 | 30-12-2021 | US 2021406644 A1 | 30-12-2021 |
|  |  | WO 2020068784 A1 | 02-04-2020 |

EPO FORM P0459

For more details about this annex : see Official Journal of the European Patent Office, No. 12/82